# EUROPÄISCHE PATENTANMELDUNG

(11) **EP 2 636 954 A2**
(43) Veröffentlichungstag der Anmeldung: **11.09.2013**
(21) Anmeldenummer: 13157371.9
(22) Anmeldetag: 01.03.2013
(51) Int. Cl.: F24C 7/08, G06F 3/01

(54) **Kamera-Modul zur Bediengestenerkennung und Haushaltsgerät**

(30) Priorität: 05.03.2012 DE 102012203457
(71) Anmelder: E.G.O. Elektro-Gerätebau GmbH, 75038 Oberderdingen (DE)
(72) Erfinder: Jungbauer, Markus, 76646 Bruchsal-Obergrombach (DE); Baier, Martin, 76275 Ettlingen (DE)
(74) Vertreter: Patentanwälte Ruff, Wilhelm, Beier, Dauster & Partner

(57) **Zusammenfassung**

Ein Kamera-Modul (100a) zur Bediengestenerkennung weist auf: eine Kamera (101), eine Auswerteeinheit (102), die von der Kamera (101) erzeugte Bilddaten zur Erkennung einer Bediengeste aus einer vorgegebenen Menge von Bediengesten auswertet, wobei die Bediengesten zur Bedienersteuerung eines Haushaltsgerätes (300) dienen, wobei das Haushaltsgerät (300) eine von dem Kamera-Modul (100a) getrennte Steuereinrichtung (200) zur Funktionssteuerung aufweist, und eine Schnittstelle (103a) zum Koppeln des Kamera-Moduls (100a) mit der Steuereinrichtung (200), wobei Informationen entsprechend der erkannten Bediengeste über die Schnittstelle (103a) zur Steuereinrichtung (200) übertragen werden.

## Beschreibung

### Anwendungsgebiet und Stand der Technik

Die Erfindung betrifft ein Kamera-Modul zur Bediengestenerkennung und ein Haushaltsgerät.

Aus der der DE 103 61 341 A1 ist eine Vorrichtung zum Bedienen eines Haushaltsgeräts bekannt, die Mittel zum berührungslosen Erkennen von Gesten umfasst und mittels der erkannten Gesten steuerbar ist.

### Aufgabe und Lösung

Der Erfindung liegt die Aufgabe zugrunde, ein Kamera-Modul zur Bediengestenerkennung und ein Haushaltsgerät zur Verfügung zu stellen, die eine einfache und kostengünstig implementierbare Gestensteuerung von Haushaltgeräten ermöglichen.

Die Erfindung löst diese Aufgabe durch ein Kamera-Modul nach Anspruch 1 und ein Haushaltsgerät nach Anspruch 8.

Bevorzugte Ausführungsformen sind Gegenstand der Unteransprüche, deren Wortlaut hiermit durch Bezugnahme zum Inhalt der Beschreibung gemacht wird.

Das Kamera-Modul zur Bediengestenerkennung weist auf: mindestens eine Kamera, beispielsweise eine Kamera oder zwei Kameras, beispielsweise jeweils mit einem Kamerachip und einer zugehörigen Optik, eine Auswerteeinheit, beispielsweise in Form eines Mikroprozessors, die von der Kamera erzeugte Bilddaten zur Erkennung einer Bediengeste aus einer vorgegebenen Menge von Bediengesten auswertet, wobei die Bediengesten zur Bedienersteuerung eines Haushaltsgerätes dienen, und eine Schnittstelle zu einer von dem Kamera-Modul getrennten Steuereinrichtung des Haushaltsgeräts, wobei Informationen betreffend die erkannte bzw. entsprechend der erkannten Bediengeste über die Schnittstelle zur Steuereinrichtung übertragen werden. Das Kamera-Modul beinhaltet bevorzugt sämtliche Komponenten und Funktionen für eine Gestenbedienung und bildet somit eine Gestensteuerungs-Benutzerschnittstelle, die mit der Steuereinrichtung des Haushaltsgeräts koppelbar ist. Über die Schnittstelle bzw. den Bus zwischen Kamera-Modul und Steuereinrichtung des Haushaltsgeräts werden bevorzugt lediglich grundlegende Informationen in Form von generischen Bediendaten übertragen. Dies ermöglicht es, dass die Steuereinrichtung keinerlei Berechnungen odgl. zur Erkennung der Bediengeste durchführen muss. Im Kamera-Modul kann eine Anzahl von vordefinierten Bediengesten abgespeichert sein. Wird eine Bediengeste erkannt, werden über die Schnittstelle beispielsweise nur die Kennung der Bediengeste und die X-, Y- und Z-Position eines Fingers und/oder einer Hand eines Bedieners, der die Bediengeste ausführt, übertragen. Bei manchen Bediengesten besteht die Möglichkeit, dass diesen keine derartigen Positionsdaten sinnvoll zugeordnet werden können. Die Schnittstelle kann beispielsweise als ein serieller oder paralleler Datenbus gebildet sein.

Mittels einer der Bediengesten kann beispielsweise eine Kochstelle bzw. Kochzone eines Kochfelds mit mehreren Kochstellen ausgewählt werden und anschließend mittels einer weiteren der Bediengesten eine gewünschte Heizleistung des Kochfelds eingestellt werden. Weiter können spezifische Funktionen des Haushaltsgeräts ausgewählt bzw. aktiviert werden, beispielsweise in Form einer Programmeinstellung, einer Programmparametereinstellung, usw.

Die Kamera kann eine 2-D-Kamera oder eine 3-D-Kamera sein, beispielsweise eine so genannte Time-of-Flight-Kamera oder eine Stereo-Kamera.

Das Kamera-Modul kann ein steuerbares Leuchtmittel bzw. eine steuerbare Lichtquelle aufweisen, wobei die Auswerteeinheit das Leuchtmittel und die Kamera miteinander synchronisiert. Das steuerbare, wobei steuerbar im einfachsten Fall ein- und ausschaltbar bedeutet, Leuchtmittel kann beispielsweise ein Infrarot-Leuchtmittel sein. Die Auswerteeinheit kann die Ansteuerung dieses Leuchtmittels vornehmen, beispielsweise synchron zu einem so genannten Shutter der Kamera. Dies kann vorteilhaft sein, da das Leuchtmittel nur in dem Moment einen Lichtpuls erzeugt, während dem die Kamera ein Bild aufnimmt.

Alternativ kann das Leuchtmittel getrennt von dem Kamera-Modul vorgesehen sein, wobei die Auswerteeinheit das Leuchtmittel und die Kamera miteinander synchronisiert, beispielsweise mittels zugehöriger Steuerleitungen und/oder durch ein Steuersignal, welches über die Schnittstelle übertragen wird. Auf dem Kamera-Modul kann ein dedizierter Steuerausgang vorgesehen sein, der die Anbindung des externen Leuchtmittels ermöglicht.

Einer jeweiligen Bediengeste aus der vorgegebenen Menge von Bediengesten kann eine eindeutige Bediengesten-Kennung zugeordnet sein, wobei die Informationen entsprechend der erkannten Bediengeste die zugeordnete Bediengesten-Kennung umfassen. Die Informationen entsprechend der erkannten Bediengeste können (räumliche) Positionsinformationen der erkannten Bediengeste umfassen, beispielsweise Koordinaten eines Fingers und/oder einer Hand eines Benutzers, der die Bediengeste ausführt.

Die Schnittstelle kann unterschiedliche Steuerleitungen umfassen, wobei einer jeweiligen Steuerleitung eine, insbesondere genau eine, Bediengeste aus der vorgegebenen Menge von Bediengesten zugeordnet ist. Die Auswerteeinheit kann beispielsweise aus der Bediengeste eine gewünschte Bedienfunktion ableiten. Diese Bedienfunktion kann dann über die zugeordnete Steuerleitung an die Steuereinrichtung des Haushaltsgeräts signalisiert werden. Dadurch kann beispielsweise ein Bedienfeld mit Tasten ersetzt werden, indem das Kamera-Modul bei einer entsprechenden Bediengeste die zugehörige Funktion auslöst.

Das Haushaltsgerät weist auf: eine Steuereinrichtung zur Funktionssteuerung des Haushaltsgeräts und eine Benutzerschnittstelle zur Bedienersteuerung des Haushaltsgeräts, wobei die Benutzerschnittstelle ein oben genanntes Kamera-Modul umfasst bzw. durch ein solches Kamera-Modul gebildet ist.

### Kurzbeschreibung der Zeichnung

Die Erfindung wird nachfolgend unter Bezugnahme auf die Zeichnungen beschrieben, die Ausführungsformen der Erfindung zeigen. Hierbei zeigt schematisch:
- Fig. 1: ein erfindungsgemäßes Haushaltsgerät gemäß einer ersten Ausführungsform,
- Fig. 2: ein erfindungsgemäßes Haushaltsgerät gemäß einer weiteren Ausführungsform und
- Fig. 3: ein erfindungsgemäßes Haushaltsgerät gemäß einer weiteren Ausführungsform.

### Detaillierte Beschreibung der Ausführungsbeispiele

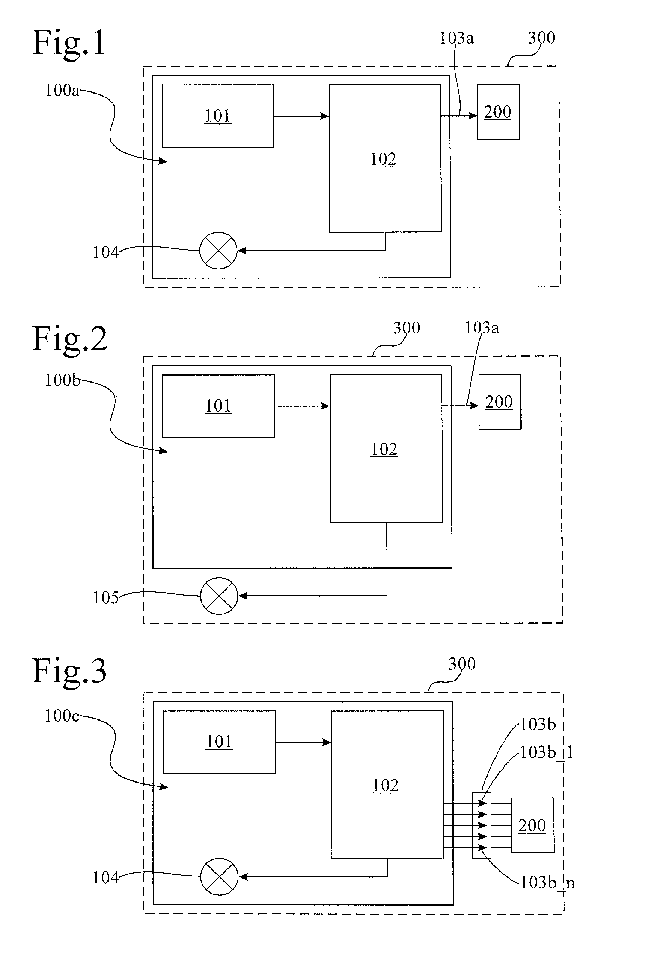

Fig. 1 zeigt ein Haushaltsgerät 300, beispielsweise in Form eines Elektroherdes, einer Waschmaschine, eines Wäschetrockners, etc., mit einer Steuereinrichtung 200, beispielsweise in Form eines Mikrocontrollers, und einer Benutzerschnittstelle zur Bedienersteuerung des Haushaltsgeräts 300 in Form eines Gestenerkennungs- oder Kamera-Moduls 100a, welches Bediengesten eines Benutzers erkennen kann.

Die Steuereinrichtung 200 dient zur Funktionssteuerung des Haushaltsgeräts 300, indem beispielsweise Aktoren geeignet angesteuert werden, Sensoren ausgelesen werden, Regelschleifen realisiert werden, vom Benutzer auswählbare Programmabläufe abgearbeitet werden, usw.

Das Kamera-Modul 100a zur Bediengestenerkennung umfasst eine oder zwei herkömmliche 2-D- oder 3-D-Kamera(s) 101, eine Auswerteeinheit 102, beispielsweise in Form eines Mikrocontrollers oder eines FPGA, die von der Kamera 101 erzeugte Bilddaten zur Erkennung einer Bediengeste aus einer vorgegebenen Menge von Bediengesten auswertet, ein von der Auswerteeinheit 102 angesteuertes Leuchtmittel 104 und eine serielle Schnittstelle 103a zum Koppeln des Kamera-Moduls 100a mit der Steuereinrichtung 200, wobei die Steuereinrichtung 200 eine nicht explizit gezeigte, korrespondierende serielle Schnittstelle aufweist.

Die Schnittstelle 103a kann beispielsweise eine herkömmliche Universal Asynchronous Receiver Transmitter(UART)-Schnittstelle sein.

Die vorgegebene Menge von Bediengesten dient zur Bedienersteuerung des Haushaltsgerätes 300, wobei die Menge folgende Gesten umfassen kann: Zeigen mit dem Zeigefinger, geschlossene Hand, gespreizte Finger, Faust, Faust mit Daumen rechts oder links, usw. Einer jeweiligen Bediengeste aus der vorgegebenen Menge von Bediengesten ist eine eindeutige Bediengesten-Kennung zugeordnet.

Das Kamera-Modul 100a erkennt zusätzlich zu der eigentlichen Bediengeste zugehörige Positionsinformationen und/oder Richtungsinformationen, beispielsweise gegebenenfalls X- und Y-Koordinaten, auf die ein Finger einer Hand eines Bedieners zeigt, X- und Y-Koordinaten der Hand und eine Z-Koordinate der Hand. Zur Bestimmung der Z-Koordinate kann eine 3-D-Kamera verwendet werden. Alternativ kann eine (pseudo) Z-Koordinate mittels einer 2-D-Kamera ermittelt werden, indem eine Größenänderung der Hand ausgewertet wird. Wenn die Hand das erste Mal von der Kamera erkannt wird, kann eine Default-Z-Koordinate vergeben werden, die dann in Abhängigkeit von einer bildlich erfassten relativen Größenänderung der Hand verändert wird.

Sobald eine Bediengeste mittels des Kamera-Moduls 100a erkannt worden ist, werden die zugehörige Bediengesten-Kennung sowie gegebenenfalls zugehörige Positionsinformationen über die Schnittstelle 103a zur Steuereinrichtung 200 übertragen. Die Steuereinrichtung 200 setzt die Bediengeste in Verbindung mit den gegebenenfalls zusätzlich übertragenen Positionsinformationen entsprechend um, indem beispielsweise eine der Geste zugehörige Funktion des Haushaltsgeräts 300 gestartet wird, eine Kochstelle ausgewählt wird, ein Sollwert verändert wird, etc.

Fig. 2 zeigt ein erfindungsgemäßes Haushaltsgerät 100b gemäß einer weiteren Ausführungsform. Bei dieser Ausführungsform ist ein bezogen auf ein Kamera-Modul 100b externes steuerbares Leuchtmittel 105 vorgesehen. Über eine speziell hierfür vorgesehene Steuerleitung wird das Leuchtmittel mit der Kamera 101 synchronisiert, wobei die Auswerteeinheit 102 die Kamera 101 und das externe Leuchtmittel 105 synchronisiert ansteuert.

Fig. 3 zeigt ein erfindungsgemäßes Haushaltsgerät 100c gemäß einer weiteren Ausführungsform. Bei dieser Ausführungsform umfasst die Schnittstelle 103b n Steuerleitungen 103b_1 bis 103b_n, wobei einer jeweiligen Steuerleitung genau eine Bediengeste aus der vorgegebenen Menge von ebenfalls n Bediengesten zugeordnet ist. Die Auswerteeinheit 102 ermittelt in diesem Fall aus der Bediengeste und einer zugehörigen Bewegung eine gewünschte Bedienfunktion. Die Bedienfunktion wird dann über eine zugehörige der Steuerleitungen 103b_1 bis 103b_n an die Steuereinrichtung 200 signalisiert. Dadurch kann z.B. ein Bedienfeld mit Tasten ersetzt werden, indem das Kamera-Modul 100c bei einer entsprechenden Bediengeste die zugehörige Bedientaste "drückt".

Aufgrund der modularen Gestaltung des Kamera-Moduls kann eine Gestenerkennung an unterschiedlichste Steuerungen mit geringem Aufwand angebunden werden. Da das Gestenerkennungs- bzw. Kamera-Modul bereits die vollständige Auswertung der von der Kamera gelieferten Bilddaten durchführt, kann die nachfolgende Steuerung mit einem günstigeren, leistungsschwächeren Prozessor realisiert werden, oder vorhandene Steuerungen können ohne Änderung um eine GestenSteuerung ergänzt werden.

## Patentansprüche

1. Kamera-Modul (100a, 100b, 100c) zur Bediengestenerkennung, aufweisend:
- eine Kamera (101),
- eine Auswerteeinheit (102), die von der Kamera (101) erzeugte Bilddaten zur Erkennung einer Bediengeste aus einer vorgegebenen Menge von Bediengesten auswertet, wobei die Bediengesten zur Bedienersteuerung eines Haushaltsgerätes (300) dienen, wobei das Haushaltsgerät (300) eine von dem Kamera-Modul (100a, 100b, 100c) getrennte Steuereinrichtung (200) zur Funktionssteuerung aufweist, und
- eine Schnittstelle (103a, 103b) zum Koppeln des Kamera-Moduls (100a, 100b, 100c) mit der Steuereinrichtung (200), wobei Informationen entsprechend der erkannten Bediengeste über die Schnittstelle (103a, 103b) zur Steuereinrichtung (200) übertragen werden.

2. Kamera-Modul nach Anspruch 1, **dadurch gekennzeichnet, dass**
- die Kamera eine 2-D-Kamera oder eine 3-D-Kamera ist.

3. Kamera-Modul nach Anspruch 1 oder 2, **dadurch gekennzeichnet, dass**
- das Kamera-Modul ein steuerbares Leuchtmittel (104) aufweist, wobei die Auswerteeinheit das Leuchtmittel und die Kamera miteinander synchronisiert.

4. Kamera-Modul nach Anspruch 1 oder 2, **dadurch gekennzeichnet, dass**
- die Auswerteeinheit ein bezogen auf das Kamera-Modul extern vorgesehenes steuerbares Leuchtmittel (105) und die Kamera miteinander synchronisiert.

5. Kamera-Modul nach einem der vorhergehenden Ansprüche, **dadurch gekennzeichnet, dass**
- einer jeweiligen Bediengeste aus der vorgegebenen Menge von Bediengesten eine eindeutige Bediengesten-Kennung zugeordnet ist, wobei die Informationen entsprechend der erkannten Bediengeste die zugeordnete Bediengesten-Kennung umfassen.

6. Kamera-Modul nach einem der vorhergehenden Ansprüche, **dadurch gekennzeichnet, dass**
- die Informationen entsprechend der erkannten Bediengeste Positionsinformationen der erkannten Bediengeste umfassen.

7. Kamera-Modul nach einem der vorhergehenden Ansprüche, **dadurch gekennzeichnet, dass**
- die Schnittstelle (103b) verschiedene Steuerleitungen (103b_1 bis 103b_n) umfasst, wobei einer jeweiligen Steuerleitung eine Bediengeste aus der vorgegebenen Menge von Bediengesten zugeordnet ist.

8. Haushaltsgerät (300), aufweisend
- eine Steuereinrichtung (200) zur Funktionssteuerung des Haushaltsgeräts (300) und
- eine Benutzerschnittstelle zur Bedienersteuerung des Haushaltsgeräts,
**dadurch gekennzeichnet, dass**
- die Benutzerschnittstelle ein Kamera-Modul (100a, 100b, 100c) nach einem der Ansprüche 1 bis 7 umfasst.
